# EUROPEAN PATENT APPLICATION

(11) **EP 0 866 430 A2**
(43) Date of publication of application: **23.09.1998**
(21) Application number: 98300810.3
(22) Date of filing: 04.02.1998
(51) Int. Cl.: G07F 9/10, G07F 11/42, G07F 11/58, G07F 11/32

(54) **Automatic vending machine**

(30) Priority: 25.02.1997 JP 40681/97
(71) Applicant: Sanden Corporation, Isesaki-shi, Gunma 372-8502 (JP)
(72) Inventor: Lin, Wen-Hsiang, Isesaki-shi, Gunma 372-8502 (JP)
(74) Representative: Jackson, Peter Arthur

(57) **Abstract**

An automatic vending machine has a plurality of commodity storage chambers in a side-by-side arrangement that are divided from one another by thermally-insulating vertical dividers so that each chamber can be heated or refrigerated individually. Each chamber has a plurality of vertically spaced commodity shelves and an elevator bucket that is adapted to receive a commodity from a selected shelf. All of the elevator buckets are rigidly connected by laterally extending connecting members that are disposed through respective vertically extending slots in the dividers, so that a single unit of plural elevator buckets acts to fetch a selected commodity, heated or cooled. A pair of flexible heat-shielding sealing strips are securely fitted in each of the slots in a manner that each of the connecting members slides on and between the corresponding pair of the sealing strips to prevent communication between the adjacent chambers as the connecting member moves vertically.

## Description

The present invention relates to an automatic vending machine having a plurality of commodity storage chambers arranged side by side for dispensing beverages or foods. The vending machine employs a heating system and a refrigerating system so that the commodity storage chambers can be either heated or cooled individually.

In known automatic vending machines there are provided a plurality of vertical commodity storage chamber sections arranged in a side by side fashion as disclosed in Japanese patent publication, laid-open no. 5-334542 dated December 17, 1993. In this vending machine, adjacent chamber sections can be partitioned off from each other by a removable one-piece thermally-insulating divider panel. By placing the divider panel at a location between selected adjacent chamber sections, two storage chambers, each consisting of one or more chamber sections, and thermally shielded from each other, can be formed side by side.

The same vending machine is equipped with a heating system and a refrigerating system so that the divided two storage chambers can be either heated or cooled individually, whereby the single vending machine can store and dispense both cold beverages and warm foods, for example.

It is further disclosed in the Japanese patent publication that a plurality of serpentine-type commodity storage racks are provided in each of the commodity storage chamber sections and a commodity take-out port is provided for each of the chamber sections.

Serpentine-type racks are widely used in prior known automatic vending machines. Each unit of the serpentine-type commodity racks, however, can carry only a single kind of commodity because all pieces of the commodity loaded on the same rack drop by own gravity through a zigzag path as the lowest piece of the commodity on the same rack is dispensed, one piece at a time.

Also known is an automatic vending machine having a plurality of vertically spaced commodity shelves. U.S. patent 4,483,459 discloses a vending machine for dispensing particularly bottles and cans. This vending machine has a plurality of vertically spaced inclined shelves and an elevator commodity carrier that can pick up a commodity from a selected shelf and transport the commodity to a dispensing station at the top of the machine. This kind of automatic vending machine can store comparatively greater number of kinds of commodity per unit storage space as compared with a vending machine having serpentine-type commodity racks because each of the vertically spaced shelves can carry a different kind of commodity.

But this kind of vending machine must employ a complex commodity pick-up and transport mechanism, and a controller therefore, that is capable of receiving a commodity from any selected shelf and transporting it to the dispensing port of the vending machine.

If an automatic vending machine has a plurality of commodity storage chambers, which can be either heated or refrigerated individually, and vertically spaced commodity shelves in each of the commodity storage chambers, the vending machine would require a separate commodity pick-up and transport mechanism, such as a separate elevator commodity carrier for each of the commodity storage chambers, and a controller for operating the separate mechanisms.

A vending machine having separate commodity storage chambers that can be either heated or refrigerated, therefore, would need either serpentine-type commodity racks that can carry comparatively small number of kinds of commodity or units of vertically spaced commodity shelves that can carry greater number of kinds of commodity but requiring complicated commodity pick-up and transport mechanisms.

In view of the above situation, it is an object of the present invention to provide an automatic vending machine having a plurality of commodity storage chambers that can be either heated or refrigerated individually, each chamber containing one or more units of vertically spaced commodity shelves, and yet, the vending machine has a single commodity dispensing port and a simple commodity receiving and transport mechanism that acts to transport a commodity from any selected shelf in any of the chambers to the commodity dispensing port.

In order to achieve the above object, an automatic vending machine according to the present invention has the features as described below.

The vending machine has a thermally-insulating housing, a plurality of commodity storage chambers arranged side by side and divided from each other by thermally-insulating vertical chamber dividers fixedly installed in the housing. Each of the commodity storage chambers contains one or more units of horizontal commodity shelves vertically spaced and each shelf is equipped with an endless conveyor belt for moving the commodity thereon frontwardly. An elevator bucket is installed in front of the shelves in each of the commodity storage chambers that is adapted to receive a commodity from the front end of any selected shelf when the conveyor belt of the selected shelf moves the commodity frontwardly.

Each of the commodity storage chambers also contains a heating unit and a cooling unit so that each of the chambers can individually be heated, cooled, or, if so desired, left at the ambient temperature.

Each of the vertical chamber dividers has a vertically extending slot in a front section thereof and each slot has a pair of flexible sealing strips securely fitted therein. The elevator buckets in the respective commodity storage chambers that are adjacent to each other are fixedly connected with each other by a connecting member in a manner that the connecting member is disposed through the vertical slot of the divider that separates the adjacent chambers between the pair of the sealing strips fitted in the slot, whereby all of the elevator buckets are fixedly connected with one another and always jointly moved vertically by a single unit of drive mechanism.

Since each of the connecting members keeps close sliding contacts with the corresponding pair of sealing strips when all of the buckets and the connecting members make vertical movements, any undesirable airflow between adjacent commodity chambers through the vertical slot can be prevented.

Each of the flexible strips has an elongated main strip and a pair of elongated sealing tongues attached to lateral sides of the main strip. Each of the main strips has either a plurality of concavities or dense bristles on the side where the corresponding connecting member makes contact in order to facilitate smooth and close sliding contacts with the connecting member and effectively block airflow between the sealing strips as the connecting member vertically moves therebetween.

In the accompanying drawings:
FIG. 1 is a front elevational view of an automatic vending machine, whose internal and external doors are removed, according to the present invention;
FIG. 2 is a side elevational sectional view of the vending machine taken along the line II-II in FIG. 1;
FIG. 3 is a perspective partial view of elevator buckets and bucket connecting members employed in the vending machine shown in FIG. 1;
FIG. 4 is a side elevational view of a thermally-insulating chamber divider employed in the vending machine shown in FIG. 1 that has a vertically extending slot and a pair of flexible sealing strips securely attached thereto;
FIG. 5 is an enlarged elevational partial front view of one of the pair of the sealing strips taken along the line V-V in FIG. 4;
FIG. 6 is an enlarged top sectional view of the sealing strip taken along the line VI-VI in FIG. 5;
FIG. 7 is a partial top sectional view particularly showing positional relations among the elevator buckets and the bucket connecting members, shown in FIG. 3, the thermally-insulating dividers and the flexible sealing strips, shown in FIG. 4; and
FIG. 8 is an enlarged top sectional view of one of flexible sealing strips of an alternative type that can be substituted for the flexible sealing strips shown in FIGs. 5, 6 and 7.

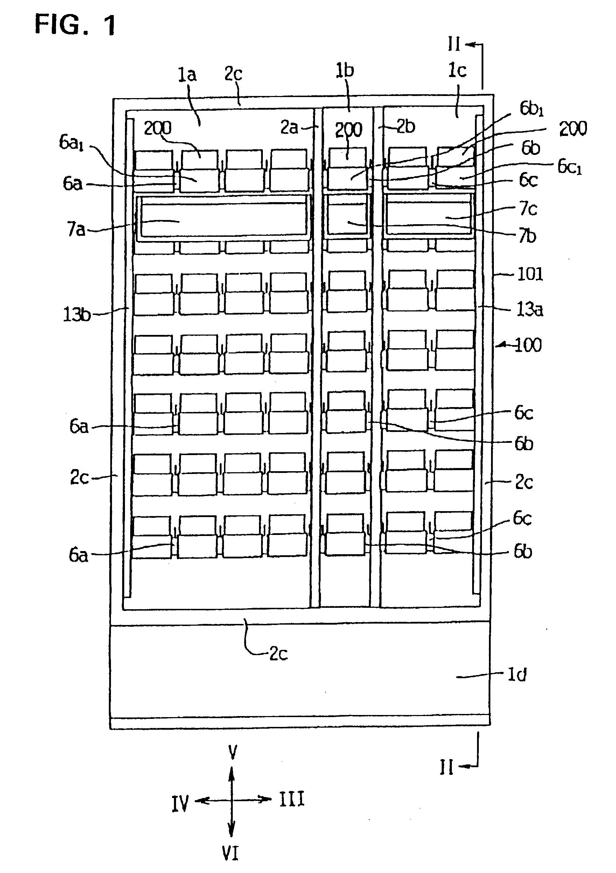

The present invention will now be described in detail with reference to FIGs. 1-7.

In FIGs. 1-7, arrows I, II, III, IV, V and VI signify front, rear, left, right, up and down positional directions, respectively, which should be interpreted as defined in the present specification.

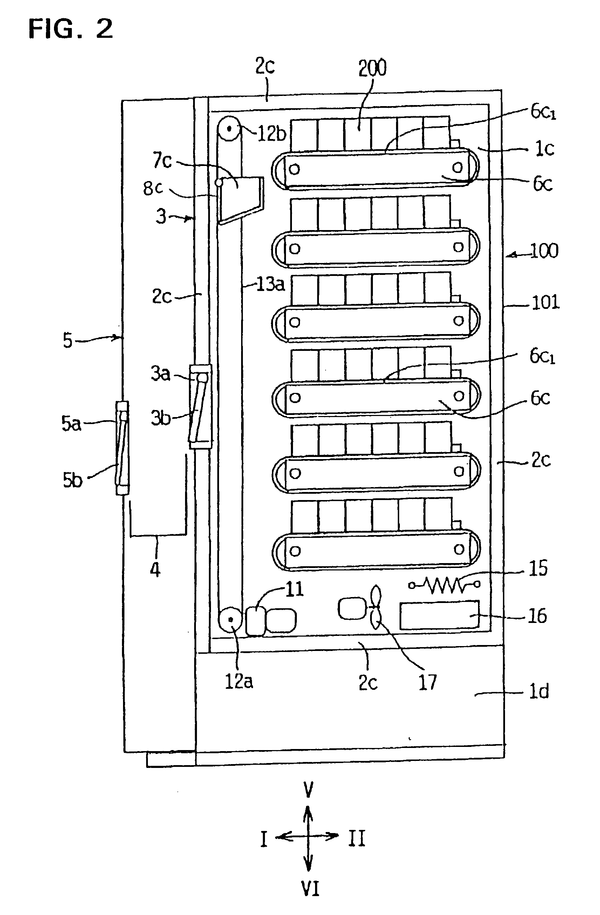

As shown in FIGs. 1 and 2, an automatic vending machine 100 has a housing 101 that has therein commodity storage chambers 1a, 1b and 1c, arranged side by side, and a machinery compartment 1d under the chambers 1a, 1b and 1c. The chambers 1a, 1b and 1c are enclosed by thermally-insulating walls 2c. The chambers 1a and 1b are separated from each other by a vertical thermally-insulating chamber divider 2a and the chambers 1b and lc are separated from each other by a vertical thermally-insulating chamber divider 2b, both of which are fixed to the hosing 101.

In reference to FIG. 2, the vending machine 100 further has, on the front side thereof, a thermally-insulating internal door 3 and an external door 5, both of which are hinged to the housing 101, and a commodity receiving tray 4. The internal door 3, when closed, also serves as the front-side wall of the thermally-insulating walls 2c. The internal door 3 has, at its approximately a middle level, a laterally extending commodity outlet 3a that has a flipping shutter 3b. The commodity receiving tray 4 is also laterally extending and is securely fixed to the housing 101. The tray 4 is disposed between the internal door 3 and the external door 5 at a level a little below the commodity outlet 3a, so that all of the commodities exiting through the commodity outlet 3a are received by the tray 4. The external door 5 has, at a level a little higher than the receiving tray 4, a laterally extending commodity take-out port 5a that has a flipping shutter 5b.

Referring to FIGs. 1 and 2, groups of horizontal commodity shelves 6a, 6b, and 6c are disposed in a manner that each group of the shelves 6a, 6b, and 6c are vertically evenly spaced in the chambers 1a, 1b and 1c, respectively. Each of the shelves 6a at an even level has four conveyer belts 6a₁ arranged side by side in parallel with each other. Likewise, each of the shelves 6b at an even level has one conveyer belt 6b₁ and each of the shelves 6c at an even level has two conveyer belts 6ci arranged side by side in parallel with each other. Each of the conveyer belts 6a₁, 6b₁ and 6ci can be operated individually so that commodities 200 on any of the conveyer belts is moved frontwardly when the conveyer belt is selectively actuated.

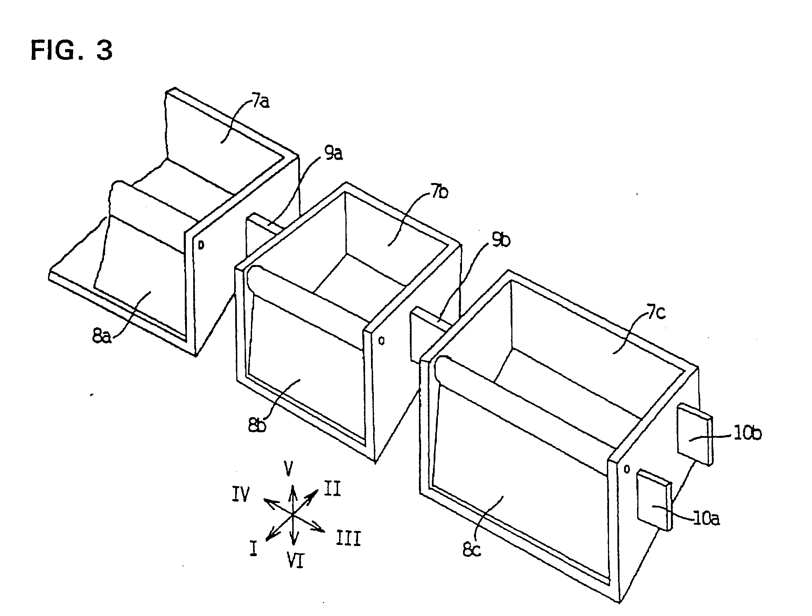

Referring to FIGs. 2 and 3, vertically movable commodity receiving elevator buckets 7a, 7b and 7c are disposed in the chambers 1a, 1b and 1c, respectively. The buckets 1a, 1b and 1c have flipping front gates 8a, 8b and 8c, respectively, and each of the buckets 7a, 7b and 7c, has a frontwardly descending bottom. As shown in FIG. 3, the buckets 7a and 7b are fixedly connected with each other by a connecting member 9a and the buckets 7b and 7c are fixedly connected with each other by a connecting member 9b in a manner that all of the buckets 1a, 1b and 1c are horizontally aligned, so that all of the buckets 1a, 1b and 1c are vertically moved always together in the chambers 1a, 1b and 1c, respectively. A pair of supporting plates 10a, 10b are fixedly attached to the left side wall of the bucket 7c and, though not shown, a pair of supporting plates are likewise fixedly attached to the right side wall of the bucket 7a. Each pair of the supporting plates are slidably fitted to a corresponding pair of vertical guide grooves (not shown) that are formed in each of the right and left heat shielding walls 2c of the chambers la and 1c, respectively.

Referring to FIG. 2, in a bottom front part of the chamber 1c are installed a bi-directional motor 11 and a driving pulley 12a that is driven by the motor 11. In a top front part of the chamber c and directly above the driving pulley 12a is disposed a driven pulley 12b. An endless drive belt 13a vertically runs over the driving and driven pulleys 12a and 12b. Likewise, though not shown, a second driving pulley and a second driven pulley are disposed in front parts of the chamber la at the same levels as of the driving pulley 12a and the driven pulley 12b, respectively, and a second drive belt 13b (FIG. 1) vertically runs over the second driving pulley and the second driven pulley. The driving pulley 12a and the second driving pulley are drivably connected with each other by a first horizontal drive shaft (not shown) through small sealed holes (not shown) of the dividers 2a and 2b. Likewise, the driven pulley 12b and the second driven pulley are drivably connected with each other by a second horizontal drive shaft (not shown) through small sealed holes (not shown) of the dividers 2a and 2b.

The supporting plates 10a, 10b attached to the left-side wall of the bucket 7c are secured to the endless belt 13a, and the supporting plates (not shown) attached to the right-side wall of the bucket 7a are secured to the endless belt 13b, so that all of the buckets 7a, 7b and 7c are vertically moved up or down as the endless belts are driven by the bi-directional motor 11.

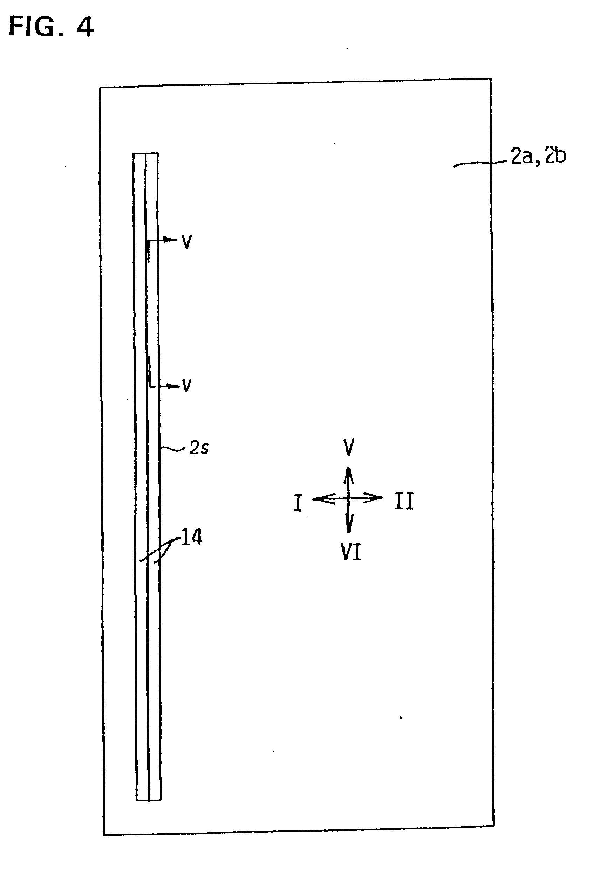

Referring to FIG. 4, each of the thermally-insulating dividers 2a and 2b has a vertically extending slot 2s in a proximity of the front end thereof. A pair of elongated sealing strips 14 are securely fitted to the vertical slot 2s of each of the dividers 2a, 2b and bonded to the respective dividers with an acrylic bonding agent. Each pair of the sealing strips 14 are made of a flexible and heat-shielding material, such as ester polyurethane foam, and are positioned opposing to, and in close contact with, each other in the corresponding slot 2s.

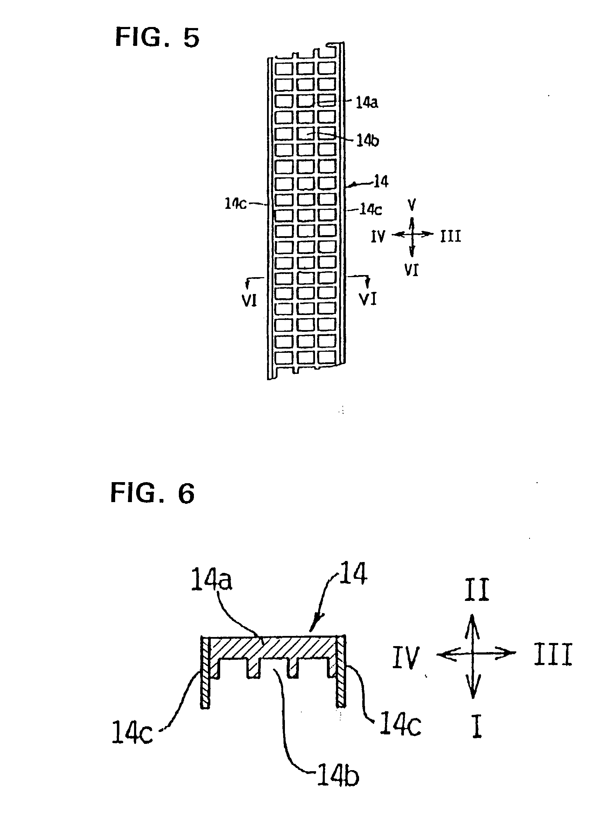

Referring to FIGs. 5 and 6, each of the sealing strips 14 consists of a main strip 14a and a pair of tongues 14c attached to the lateral sides of the main strip 14a. Each of the main strip 14a has a plurality of concavities 14b of a uniform form on the side opposing to the other strip of the pair.

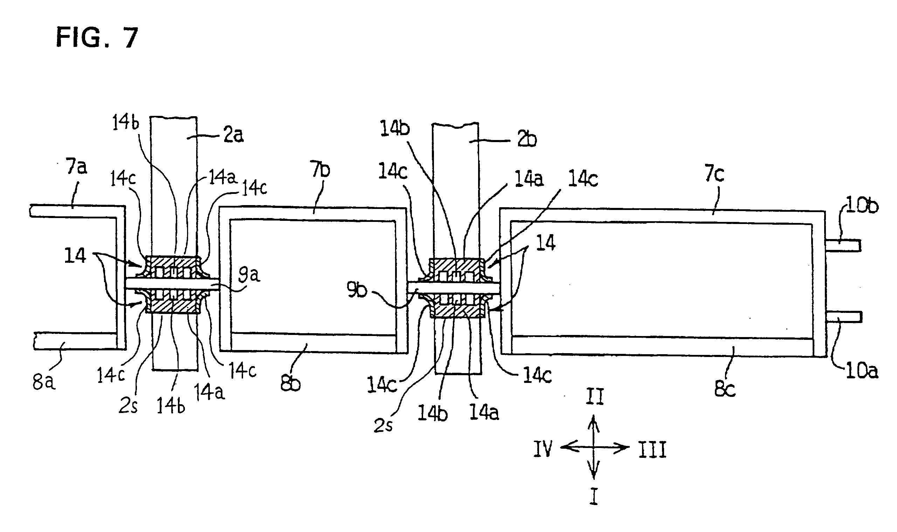

Referring to FIG.7, the connecting member 9a, which connects the bucket 7a with the bucket 7b, is disposed between the pair of opposed sealing strips 14 fitted in the slot 2s of the divider 2a in a manner that the connecting member 9a can vertically move, sliding on and between the opposed sealing strips 14. The opposing surfaces having the concavities 14b of the main strips 14a and the flexed tips of the tongues 14c of the sealing strips 14 maintain close contacts with the connecting member 8a so that the sealing strips 14 effectively block airflow between the chambers 1a and 1b when the connecting member 9a moves vertically through the slot 2s of the divider 2a between the opposed sealing strips 14. Likewise, the connecting member 9b, which connects the bucket 7b with the bucket 7c, is disposed between the pair of opposed sealing strips 14 fitted in the slot 2s of the divider 2b in a manner that the connecting member 8a can vertically move, sliding on and between the opposed sealing strips 14, so that airflow between the chambers 1b and lc can be prevented when the connecting member 9b moves vertically through the slot 2s of the divider 2b between the opposed sealing strips 14, as in the case of the connecting member 9a.

Referring to FIG. 2, an electric heater 15, a cooler 16, which is a heat exchanger (i.e. evaporator) of a refrigeration system, and an air blower 17 are installed in bottom parts of each of the chambers 1a, 1b and 1c. Although not shown, other equipment of the refrigeration system, such as a refrigerant compressor, is installed in the machinery compartment 1d.

Now, the operation of the automatic vending machine 100 will be explained.

As an exemplified case, it is assumed that the chamber la is heated by the heater 15 and the chambers 1b and lc are refrigerated by the respective coolers 16. Each of the blowers 17 enables efficient circulation of cooled or heated air in the corresponding chamber.

When a customer selectively pushes one of the commodity selection buttons (not shown) installed in the external door 5, a controller (not shown) causes the motor 11 to be driven in a proper direction as directed by the controller. Then, the pulleys 12a, 12b are rotated, the endless belts 13a, 13b are driven, and the elevator buckets 7a, 7b and 7c are vertically moved to the level of the commodity shelf that is designated by the controller according to the commodity selection made by the customer. As the buckets 7a, 7b and 7c move vertically, the connecting members 9a, 9b move between the respective pairs of the sealing strips 14 maintaining close sliding contacts with the respective main strips 14a and the tongues 14c.

If, for example, the commodity 200 selected by the customer to be dispensed is on one of the four conveyor belts 6ai of the third shelf 6a from the top in the chamber la, the corresponding conveyor belt 6a₁ is driven according to the instructions by the controller, the commodity, which is heated, is moved frontwardly by the conveyor belt 6a₁ and dropped into the elevator bucket 7a. Since the bucket shutter 8a is normally latched, the commodity is held in the bucket 7a for the time being. Then, the bucket 7a, together with the buckets 7b, 7c, is moved down to the level of the commodity outlet 3a. Next, the controller causes the bucket shutter 8a (FIG. 7) to be unlatched by a triggering solenoid (not shown), thereby causing the commodity in the bucket 7a to slide down frontwardly on the sloped bottom of the bucket 7a. The weight of the commodity forces the shutter 8a to open, and the commodity drops into the commodity receiving tray 4. The customer manually opens the flipping shutter 5b and takes out the heated commodity through the commodity take-out port 5a.

If, for example, the commodity 200 selected by the customer to be dispensed is on the belt 6bi of the third shelf 6b from the top in the chamber 1b, the corresponding belt 6bi is driven according to the instructions by the controller, the commodity, which is cooled, is moved frontwardly by the conveyor belt 6b₁ and dropped into the elevator bucket 7b. Then, the commodity is vertically moved by the bucket 7b to the level of the commodity outlet 3a, and dropped into the commodity receiving tray 4 through the commodity outlet 3a as the bucket shutter 8b is unlatched. The customer takes out the cooled commodity through the commodity take-out port 5a, as in the case of the above example.

If, for example, the commodity 200 selected by the customer to be dispensed is on one of the two belts 6ci of the third shelf 6c from the top in the chamber 1c, the corresponding belt 6c₁ is driven according to the instructions by the controller, the commodity, which is also cooled, is moved frontwardly by the conveyor belt 6c₁ and dropped into the elevator bucket 7c. Then, the commodity is vertically moved by the bucket 7c to the level of the commodity outlet 3a, and dropped into the commodity receiving tray 4 through the commodity outlet 3a as the bucket shutter 8c is unlatched. The customer takes out the cooled commodity through the commodity take-out port 5a, as in the case of the above examples.

In the automatic vending machine 100 according to the present invention, the three commodity chambers 1a, 1b and 1c are physically separated and thermally insulated from one another by the thermally-insulating dividers 2a and 2b, and each of the three chambers 1a, 1b and 1c is equipped with the heater 15, the cooler 16 and the air blower 17. Since the vertically movable elevator buckets 7a, 7b and 7c are disposed in the chambers 1a, 1b and 1c, respectively, the vending machine 100 can dispense either heated commodity or cooled commodity at customer's choice. It goes without saying that any of the commodity chambers 1a, 1b and 1c may be kept at the ambient temperature without being heated or cooled, if so desired by the user.

Furthermore, in the automatic vending machine 100 according to the present invention, the elevator buckets 7a, 7b and 7c are connected with one another and all of the connected buckets 7a, 7b and 7c are vertically moved by a single unit of drive mechanism including the motor 11 and the endless belts 13a, 13b, the drive mechanism is simple in construction and the cost economy of the vending machine 100 is, therefore, enhanced. Since each of the thermally-insulating dividers 2a and 2b has the vertically extending flexible sealing strips 14, securely fitted in the corresponding slot 2s, and the elevator buckets 7a, 7b and 7c are connected with one another by the connecting members 9a and 9b that are disposed between the respective pairs of the sealing strips 14, and the sealing strips 14 always maintain close contacts with the respective connecting members 9a and 9b, the vertical movements of the connecting members 9a and 9b do not cause any communication between adjacent chambers, thereby preventing thermal loss when there is a temperature difference between the adjacent chambers.

Even still, the flexible tongues 14c are attached to the lateral sides of each of the main strips 14a, and the tongues 14c maintain close contacts with the respective connecting members 9a and 9b. The tongues 14c, therefore, additionally ensure the sealing effect of the sealing strips 14.

Additionally, the concavities 14b formed on the opposed sides of the main strips 14a of each pair of the sealing strips 14 serve as air pockets that cause to minimize heat conduction through the sealing strips 14, thereby also preventing thermal loss between the adjacent chambers.

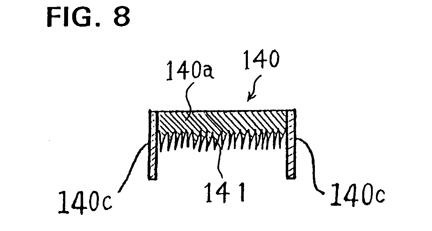

FIG.8 is an enlarged top sectional view of one of flexible sealing strips 140 of an alternative type, made of polypropylene, that can be substituted for the flexible sealing strips 14 shown in FIGs. 5, 6 and 7. Each of the substitute flexible sealing strips 140 has a main strip 140a that has dense bristles 141 on the side opposing to the other strip of the pair and a pair of tongues 140c attached to the lateral sides of the main strip 140a. The forms of the tongue 140c are identical to those of the tongues 14c of the sealing strips 14 described above.

The bristles 141 and the tongues 140c maintain close contacts with the respective connecting members 9a and 9b, when the connecting members 9a and 9b vertically move between respective pairs of the sealing strips 140, thereby blocking airflow between adjacent commodity chambers la and 1b or 1b and 1c, as in the case of the sealing strips 14.

In alternative embodiments, the tongues 14c and 140c may be attached to only one lateral side of each of the main strips 14a and 140a, respectively.

Although three commodity chambers 1a, 1b, 1c are provided in the above described embodiment, the number of the commodity chambers may be properly changed in alternative embodiments.

## Claims

1. An automatic vending machine (100), comprising:
(a) a thermally-insulating housing (101);
(b) a thermally-insulating vertical chamber divider (2a,2b) fixedly installed in said housing in a manner that a first commodity storage chamber (la) and a second commodity storage (la,lc) chamber are formed in said housing in a side-by-side arrangement that are divided from each other by said divider, said divider having a vertically extending slot (2s) and a means (14,140) for blocking airflow between said first and second commodity storage chambers (la,lb,lc) that is securely fitted in said vertical slot (2s);
(c) a plurality of first commodity shelves (6a) vertically spaced and a plurality of second commodity shelves (6a,6c) vertically spaced that are fixedly installed in said first chamber (1a) and said second chamber (1b,1c), respectively;
(d) a first commodity elevator carrier (7a) and a second commodity elevator carrier (7b,7c) disposed in said first chamber and said second chamber (1a,1b,1c) respectively, each of said first elevator carrier and said second elevator carrier being arranged to receive a commodity (200) from a selected one of said first shelves (6a) and said second shelves (6a,6b), respectively, said first commodity elevator carrier (7a) and said second commodity elevator carrier (7b,7c) being connected with each other by a connecting member (9a,9b) in a manner that said connecting member (9a,9b) is disposed through said vertical slot (2s) of said divider (2a,2b) so that the said first and second commodity elevator carriers (7a,7b,7c) move vertically and always jointly; and
(e) means (15) for heating said first chamber (la) and means (16) for refrigerating said second chamber (1a,1c).

2. An automatic vending machine according to claim 1, wherein said means (14) for blocking airflow between said first and second commodity storage chambers (1a,1b,1c) is a pair of heat-shielding flexible sealing strips that are arranged to accept said connecting member (9a,9b) therebetween.

3. An automatic vending machine according to claim 2, wherein each of said pair of sealing strips (14) has an elongate main body (14a) and at least one elongate sealing tongue (14c) attached to a side of said main body (14a).

4. An automatic vending machine according to claim 3, wherein said main body (14a) has a plurality of concavities (14b) on one side thereof.

5. An automatic vending machine according to claim 3, wherein said main body (140a) has dense bristles (141) on one side thereof.

6. An automatic vending machine (100), comprising:
(a) a thermally-insulating housing (101);
(b) at least one thermally-insulating vertical chamber divider (2a,2b) fixedly installed in said housing in a manner that a plurality of commodity storage chambers (1a,1b,1c), which are separated from each other by said chamber divider, are formed in a side-by-side arrangement in said housing (101), said chamber divider (2a,2b) having a vertically extending slot (2s) and a means (14,140) for blocking airflow between said chambers (1a,1b,1c) through said slot (2s);
(c) a plurality of vertically spaced commodity shelves (6a,6b,6c) fixedly disposed in each of said chambers (1a,1b,1c);
(d) a vertically movable commodity elevator carrier (7a,7b,7c) disposed in each of said chambers (1a,1b,1c), each of said elevator carriers being arranged to receive a commodity (200) from a selected one of said shelves (6a,6b,6c) in one of said chambers (1a,1b,1c), any pair of said commodity elevator carriers that are disposed in a pair of said chambers adjacent to each other being securely connected with each other by a connecting member (9a,9b) in a manner that said connecting member is disposed through the vertical slot (2s) of the chamber divider (2a,2b) that is interposed between said pair of adjacent chambers from each other so that all of said commodity elevator carriers (7a,7b,7c) vertically move always jointly; and
(e) means (15) for heating each of said chambers and means (16) for refrigerating each of said chambers.
